# EUROPÄISCHE PATENTANMELDUNG

(11) **EP 0 860 690 A1**
(43) Veröffentlichungstag der Anmeldung: **26.08.1998**
(21) Anmeldenummer: 98102403.7
(22) Anmeldetag: 12.02.1998
(51) Int. Cl.: G01F 11/02, G01F 11/24, G01F 11/00, B65G 65/48

(54) **Dosier- und Austragsvorrichtung für Schüttgüter**

(30) Priorität: 19.02.1997 DE 19706407
(71) Anmelder: Fricke Abfülltechnik GmbH & Co., 32423 Minden (DE)
(72) Erfinder: Fricke, Werner, 32547 Bad Oeynhausen (DE)
(74) Vertreter: Hanewinkel, Lorenz, Dipl.-Phys.

(57) **Zusammenfassung**

Die Dosier- und Austragsvorrichtung für Schüttgüter (G) weist einen das Schüttgut (G) aufnehmenden Behälter (1) mit untenseitigem Auslaß (3) und einen im Behälter (1) vertikal verstellbaren, den Auslaß öffnenden und verschließenden Dosierkörper auf.

Ein im Behälter (1) feststehendes oder rotierendes Dosierrohr (4) hat mindestens eine Einlauföffnung (5, 6) für das aus dem Behälter (1) in das Dosierrohr (4) hineinzuführendes Schüttgut (G) und nimmt in sich einen vertikal verschiebbaren, den Querschnitt der Einlauföffnung (5, 6) stufenlos oder stufenweise einstellenden, kolbenförmigen Dosierschieber (9) auf.

Das rotierende Dosierrohr (4) besitzt an seiner loch- oder schlitzförmigen Einlauföffnung (5, 6) eine nach außen vorstehende Schälkante (6, 7) für das aus dem Behälter (1) in das Dosierrohr (4) hineinzuführende Schüttgut (G).

## Beschreibung

Die Erfindung bezieht sich auf eine Dosier- und Austragsvorrichtung für feste Schüttgüter gemäß den Merkmalen des Oberbegriffes nach Patentanspruch 1.

Derartige Dosier- und Austragsvorrichtungen für feste und rieselfähige Schüttgüter für die Riechstoff-, Geschmackstoff- und Farbindustrie sind in verschiedenen Ausführungen bekannt geworden.

Dabei haben die bekannten Vorrichtungen einen das Schüttgut aufnehmenden Behälter, in dem ein Dosier- und Austragsmittel angeordnet ist. Beispielsweise wird als Dosier- und Austragsmittel eine Förderschnecke oder ein rotierender und höhenverstellbarer Kegel eingesetzt.

Eine Förderschnecke hat bei ausreichend hoher Austragsmenge eine unzureichende Genauigkeit in der jeweiligen Dosierung. Eine kleine Förderschnecke hat hingegen die gewünschte Genauigkeit aber eine unzureichende Austragsmenge. Bekannte Ausführungen, die beide Forderungen erfüllen, sind in der Regel mit zwei Schneckensystemen ausgestattet.

Diese Dosiervorrichtungen sind in der Konstruktion verhältnismäßig aufwendig und kostspielig.

Beim Einsatz eines rotierenden und vertikal verstellbaren Dosierkegels, der dann zum Auslaß hin nach unten sich erweitert, ist die Dosierung ebenfalls unbefriedigend, denn der austretende Schüttgutstrom wird verstreut an den darunter stehenden Aufnahmebehälter abgegeben, so daß keine zentrale Schüttgutabgabe erfolgt und ein Teilbereich desdosierten Schüttgutes über den Behälter hinaus gewirbelt werden kann.

Solche Ausführungen eignen sich für eine begrenzte Art von Produkten. Bei körnigen Feststoffen besteht die Gefahr, daß nach beendeter Dosierung der Dosierkegel durch klemmende Körner seine Schließstellung nicht erreicht. Aufgabe der Erfindung ist es, die nach der eingangs genannten Art ausgeführte Dosier- und Austragsvorrichtung im Hinblick auf einen einfachen und kostengünstigen Aufbau und eine genaue Dosierung mit optimalem Schüttgut-Dosierfluß zu verbessern und diese Vorrichtung für die in der Art und Konsistenz verschiedensten Schüttgütern (Körner, Pulver, Granulate, Klumpen, schmierende Produkte o. dgl.) mit störungsfreiem Schüttgutfluß zum Dosierbereich und streufreien Schüttgut-Auslauf auszulegen.

Diese Aufgabe wird erfindungsgemäß durch die kennzeichnenden Merkmale des Patentanspruches 1 gelöst.

Die sich daran anschließenden Unteransprüche beinhalten Gestaltungsmerkmale, welche vorteilhafte und förderliche Weiterbildungen der Aufgabenlösung darstellen.

Die Dosier- und Austragsvorrichtung gemäß der Erfindung weist in einem Schüttgutbehälter ein Dosierrohr mit loch- oder schlitzförmigen Einlauföffnungen und einen darin vertikal auf den Dosierquerschnitt dieser Einlauföffnungen einstellbaren Dosierkolben auf und das rieselfähige Schüttgut läuft aus dem Schüttgutbehälter durch den eingestellten Dosierquerschnitt in das Dosierrohr hinein und aus diesem dann unten aus den Auslauf in einem gebündelten zentralen Schüttgutstrom aus, so daß beim Auslaufen keine Streuwirkung entsteht und der Schüttgutstrom gezielt in den darunter gestellten Behälter fließen kann.

Bei dem rieselfähigen, körnigen oder pulverförmigen Gut fließt dieses direkt in die Einlauföffnungen des Dosierrohres hinein und wird innen in dem Dosierrohr nach unten abgeführt.

Sofern zäh rieselndes oder festeres Schüttgut für die Dosierung eingesetzt wird, dann ist das Dosierrohr im Behälter in eine Rotation versetzbar und zeigt im Bereich der Einlauföffnungen Schälkanten (Schabkanten), die Schüttgutteile (Partikel) aus dem behälterseitigen Schüttgut abschälen und zu den Einlauföffnungen fördern und in diese einbringen, wobei dann diese Schüttgutteilchen dosiert durch das Dosierrohr und aus dem Auslauf auslaufen können. Demzufolge ist mit einem rotierenden Dosierrohr mit den Schälkanten auch der Einsatz und eine genaue und einwandfreie Dosierung von schwierigeren Schüttgütern möglich.

Bei schmierenden Schüttgütern wird das Dosierrohr mit schlitzförmigen Einlauföffnungen ausgestattet und in diese Öffnungen greift dann der Dosierkolben mit einem Querstift ein, der vor jedem Dosiervorgang durch den einzustellenden Dosierhub (Höhenverstellung des Kolbens) die schlitzförmigen Einlauföffnungen reinigt und ein Anhaften und Zusetzen des Schlitzes durch Schüttgut vermeidet, wodurch auch wiederum eine einwandfreie Dosierung erfolgt.

Die gesamte Vorrichtung ist einfach und kostengünstig aufgebaut, ist in ihrer Dosierwirkung durch das Dosierrohr mit den Einlauföffnungen und den vertikal einstellbaren Dosierkolben genau einstellbar und hat eine äußerst günstige Arbeitsgeschwindigkeit.

Weiterhin lassen sich bei dieser Vorrichtung praktisch die verschiedensten Schüttgüter in ihrer Zusammensetzung und Korngröße bzw. Konsistenz einsetzen und verarbeiten.

Anhand der Zeichnungen wird nachfolgend ein Ausführungsbeispiel der Erfindung in Variationen näher erläutert. Es zeigt:
- Fig. 1: eine Seitenansicht einer Dosier- und Austragsvorrichtung aus Schüttgutbehälter mit Dosierrohr und darin verstellbarem Dosierkolben sowie an das Dosierrohr und den Dosierkolben ankoppelbaren Antrieb,
- Fig. 2: eine Seitenansicht im Schnitt des Behälters mit Dosierrohr und Dosierkolben,
- Fig. 3: einen Längsschnitt durch das Dosierrohr mit vertikal verstellbarem Kolben in der Kolben-Dosierstellung und der Kolbenschließstellung,
- Fig. 4: einen Querschnitt gemäß Schnittlinie I-I in Fig. 3 des Dosierrohres mit Schlitzen und außenseitigen Schälkanten und Dosierkolben mit in die Schlitze eingreifendem Querstift,
- Fig. 5: einen halben Längsschnitt des Dosierrohres mit ausgeformten Löchern mit kraterartigen Schälrändern an den Löchern,
- Fig. 6 und Fig. 7: Draufsichten im teilweisen Schnitt auf das Dosierrohr mit Dosierkolben und auf einem Quadrat sowie Sechseck angeordneten, die Schlitze und Schälkanten bildenden Messer,
- Fig. 8: eine schematische Seitenansicht des Dosierrohrs nach Fig. 7,
- Fig. 9: eine Draufsicht im Schnitt auf eine ovales Dosierrohr mit Schälkanten und Dosierkolben.

Die Dosier- und Austragsvorrichtung für feste, rieselfähige körnige oder pulverförmige Schüttgüter für Parfüm- oder Farbprodukte weist einen das Schüttgut (G) aufnehmenden Behälter (1) mit obenseitigem Füllstutzen (2) und untenseitigem Auslaß (3) auf.

Im Behälter (1) ist ein rotierendes Dosierrohr (4) mit mindestens einer Einlauföffnung (5/6) und glatter Außenmantelfläche oder mit daran nach außen vorstehender Schälkante/Schabkante (7,8) für das aus dem Behälter (1) in das Dosierrohr (4) hineinzuführende Schüttgut (G) angeordnet. Im Dosierrohr (4) liegt ein vertikal verschiebbarer, den Querschnitt der Einlauföffnung (5, 6) stufenlos einstellenden Dosierkolben (9) als Dosierschieber.

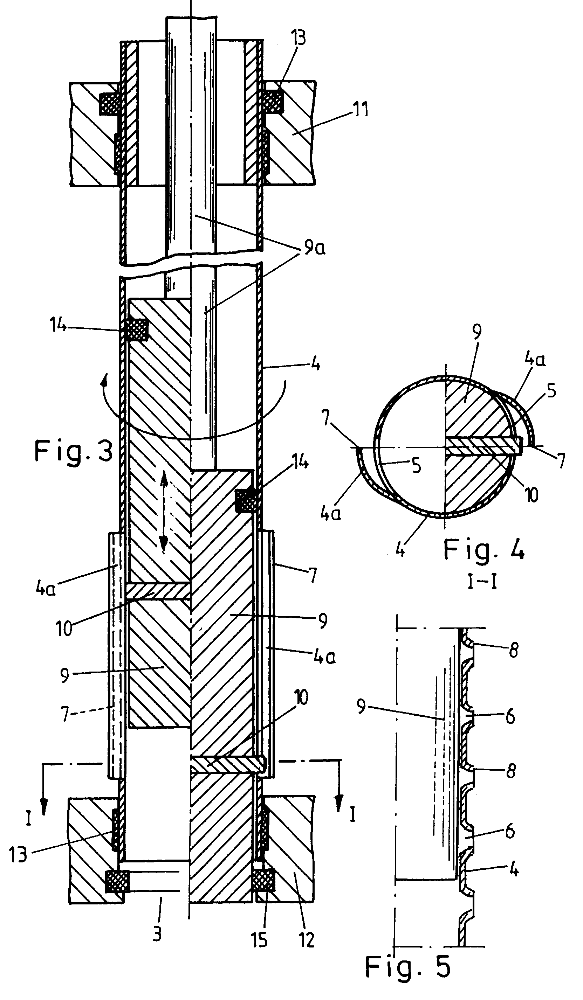

Im Dosierrohr (4) sind gemäß der Ausführung nach Fig. 5 mehrere Löcher (6) als Einlauföffnungen (6) mit nach außen herausgeformten, Schälkanten (8) bildenden Rändern (8) ausgenommen.

Die Löcher (6) im Dosierrohr (4) liegen in Rohr-Längsrichtung und auf dem Rohr-Umfang im gleichen und/oder unterschiedlich großen Abstand zueinander und ihre Ränder (8) sind kraterartig ausgeformt; die Ränder (8) laufen jeweils um den gesamten Lochumfang.

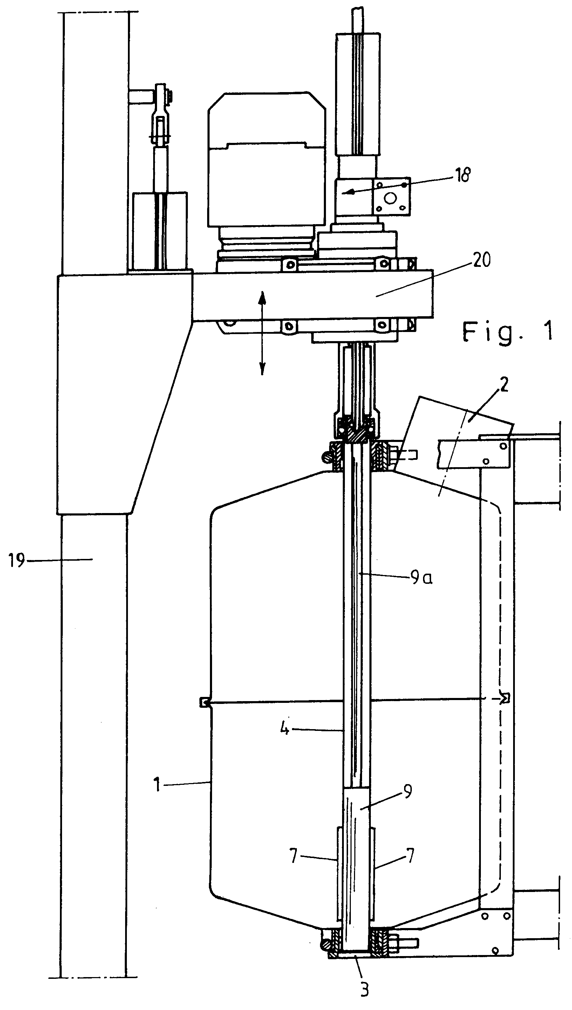

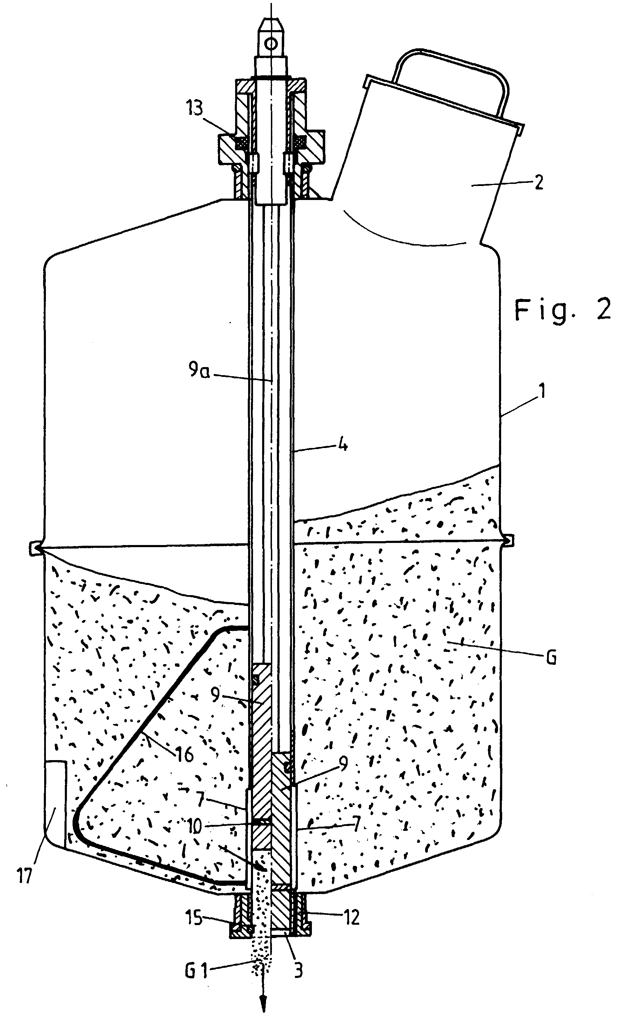

Bei der weiteren Ausführung nach Fig. 1 bis 4 ist im Dosierrohr (4) als Einlauföffnung (5) ein in Rohr-Längsrichtung verlaufender Schlitz (5) ausgespart, dem eine sich über die gesamte Schlitzlänge erstreckende, messerartige Schälkante (7) zugeordnet ist.

Die Schälkante (7) ist in bevorzugter Weise von einem nach außen herausgeformten und gleichzeitig den Schlitz (5) ergebenden Rohrstreifen (4a) des Dosierrohres (4) gebildet, wobei diese Rohrstreifen (4a) gleichzeitig Förderleisten bilden.

Der Rohrstreifen (4a) steht mit einem Streifen-Längsrand mit dem Dosiermantel in einstückiger Verbindung, erstreckt sich bogenförmig mit Abstand vor dem Schlitz (5) und bildet mit seinem freien Streifen-Längsrand die Schälkante (7).

Es ist bevorzugt, im Dosierrohr (4) zwei sich auf dem Rohr-Umfang gegenüberliegende Schlitze (5) mit je einer Schälkante (7) vorzusehen; es können auch mehr als zwei Schlitze (5) im Dosierrohr (4) ausgenommen sein.

Die Schlitze (5) nehmen mit ihrer Länge und die Löcher (6) mit ihrer Reihenlänge einen Teil der Rohrlänge des Dosierrohres (4) ein und beginnen mit Abstand zum unteren in den Auslaß (3) eintauchenden Ende des Dosierrohres (4).

Anstelle der herausgestanzten und gebogenen Schälkanten (7) kann am Dosierrohr (4) für jeden Schlitz (5) ein Schälmesser (7) befestigt sein.

Der Dosierkolben (9) für die Löcher (6) und Schlitze (5) ist von einem Kolben mit kreisförmigem, eckigem oder ovalem Querschnitt gebildet.

Der Dosierkolben (9) hat bei der Ausführung des Dosierrohres (4) mit Schlitzen (5) einen Querstift (10), der in den bzw. in die Schlitze (5) eingreift und dabei mindestens in der Wandstärke des Dosierrohres (4) liegt, vorzugsweise mit seinem freien Ende nach außen aus den Schlitzen (5) heraussteht (Fig. 4).

Das Dosierrohr (4) und der Kolben (9) haben gemäß Fig. 1 bis 5 einen Kreisquerschnitt und sind in Längsrichtung zylindrisch ausgebildet.

Das Dosierrohr (4) ist mit seinem oberen und unteren Längsende mittels je einer Dichtung (13) in einer Lagerung (11, 12) abgedichtet gehalten, wobei die untere Lagerung (12) gleichzeitig den Auslaß (3) aufweist; der Kolben (9) ist mit einer am oberen Kolbenende angeordneten Dichtung (14) gegenüber dem Dosierrohr (4) abgedichtet und taucht mit seinem unteren Ende in der Schließstellung des Auslasses (3) in eine Dichtung (15) der auslaufseitigen Lagerung (12) ein.

Am Dosierrohr (4) ist mindestens ein mit demselben rotierender Rührer (16) in Bügelform zur Schüttgutauflockerung befestigt und der Behälter (1) hat mindestens eine das Schüttgut (G) gegen Rotation sichernde Rückhaltewand (17).

Das Dosierrohr (4) mit der Verstellstange (9a) des Kolbens (9) ist mit dem oberen aus dem Behälter (1) herausstehenden Endbereich an einen Antrieb (18) für die Dosierrohr-Rotation und Kolben-Vertikalverstellung ankuppelbar.

Der mit Schüttgut (G) gefüllte Behälter (1) wird in die Dosierstellung unter den an einem Gestell (19) mit einem Träger (20) angeordneten Antrieb (18) gefahren. Durch Absenken des Antriebsträgers (20) wird das Dosierrohr (4) mit der Verstellstange (9a) des Dosierschiebers (9) an den Antrieb (18) angekuppelt. Die Verstellstange (9a) wird durch den Antrieb (18) angehoben, so daß der Dosierkolben (9) vertikal zur Dosiereinstellung verstellt wird.

Hierdurch werden die Löcher (6) bzw. Schlitze (5) je nach der gewünschten Dosiergröße mehr oder weniger freigegeben.

Das Schüttgut (G) kann nunmehr aus dem Behälter (1) durch die Löcher (6) oder Schlitze (5) in das Dosierrohr (4) unterhalb des Dosierkolbens (9) einlaufen und dann rieselt es in einem zentralen, gebündelten Gutstrom-Strahl (G1) nach unten aus dem Auslauf (3) in einen darunter befindlichen Behälter.

Hierbei brauchen am Dosierrohr (4) außen keine Schälkanten (7, 8) vorgesehen sein, so daß das einwandfrei rieselnde Schüttgut (G) in die Einlauföffnungen (5, 6) einfließen kann.

Das Dosierrohr (4) kann bei der Dosierung ohne Rotation das Schüttgut (G) aufnehmen oder aber auch verdreht werden.

Durch Hubänderung des Dosierkolbens (9) kann die auslaufende Schüttgutmenge bei rieselfähigem Schüttgut (G) gesteuert werden.

Bei Schüttgut (G), das nur schwer oder nicht rieselfähig ist, wird die Schälwirkung des Dosierrohres (4) eingesetzt.

Das Dosierrohr (4) wird dann durch den Antrieb (18) in Rotation versetzt, wobei dann die Schälkanten (7, 8) Schüttgutteile vom Schüttgut (G) abschälen und ggfls. zerkleinern und in die Löcher (6) oder Schlitze (5) fördern.

Der Antrieb (18) ist vorzugsweise drehzahlgesteuert, so daß eine Feinabstimmung der Dosierung erreicht wird.

Bei hoher Dosiermenge wird der Dosierkolben (9) so weit oder völlig angehoben, so daß viele oder alle Einlauföffnungen (5, 6) freigegeben sind und dabei erhält das Dosierrohr (4) eine hohe Drehzahl.

Zum Dosierende hin wird die Drehzahl des Dosierrohres (4) reduziert und der Dosierkolben (9) kann bis auf einen minimalen Durchlaßquerschnitt der Einlauföffnungen (5, 6) heruntergefahren werden.

Bei Erreichen der Dosiermenge wird die Dosierrohrdrehung unterbrochen und der Dosierkolben (9) völlig nach unten in die Dichtstellung gefahren und schließt den Auslaß (3).

Durch die Dichtungen (13, 14, 15) wird feuchtigkeitsempfindliches Schüttgut (G) von der Außenluft hermetisch abgeschlossen.

In dieser Vorrichtung können sämtliche Schüttgüter (G), ob rieselfähige, körnige, pulvrige oder zum Klumpen oder Schmieren neigende Güter für den Dosiervorgang eingesetzt werden.

Bei der Schlitzausführung des Dosierrohres (4) wird der mit seinem Querstift (10) in die Schlitze (5) eingreifende Dosierkolben (9) ebenfalls mit verdreht.

Bei Einsatz von schmierendem Schüttgut (G) muß ein Zusetzen der Schlitze (5) verhindert werden, was durch den Querstift (10) bewirkt wird, in dem der Kolben (9) bei jedem Dosiervorgang auf der freizugebenden Schlitzlänge verschoben wird und dadurch der Querstift (10) die Schlitze (5) vom Schüttgut (G) befreit und reinigt.

Bei rieselfähigem Gut (G) kann auf die Schälkanten (7, 8) an den Einlauföffnungen (5, 6) verzichtet werden und die Löcher (6) sowie Schlitze (5) im Dosierrohr (4) außen glatt sein, d.h. das Dosierrohr (4) hat keine Ausformungen (7, 8), sondern der Außenmantel ist glatt.

Hierbei läuft das Schüttgut (G) auch bei nicht rotierenden Dosierrohr (4) von außen in dasselbe ein und die Dosiermenge wird durch den eingestellten Dosierkolben (9) bestimmt.

Der Behälter (1) kann die verschiedensten Raumformen haben.

Der den Dosier- und Einlaufbereich für das Schüttgut (G) bildende Längenbereich des Dosierrohres (4) kann auch als ein Form- oder Bauteil gestaltet sein, welches aus Lamellen (21) oder Stäben (21) besteht, welche zwischen sich die Schlitze (5) bilden und mit/ohne Schälkanten (21a) ausgestattet sind. Im Kern dieser Lamellen oder Stäbe (21) ist der Dosierkolben (9) verschiebbar.

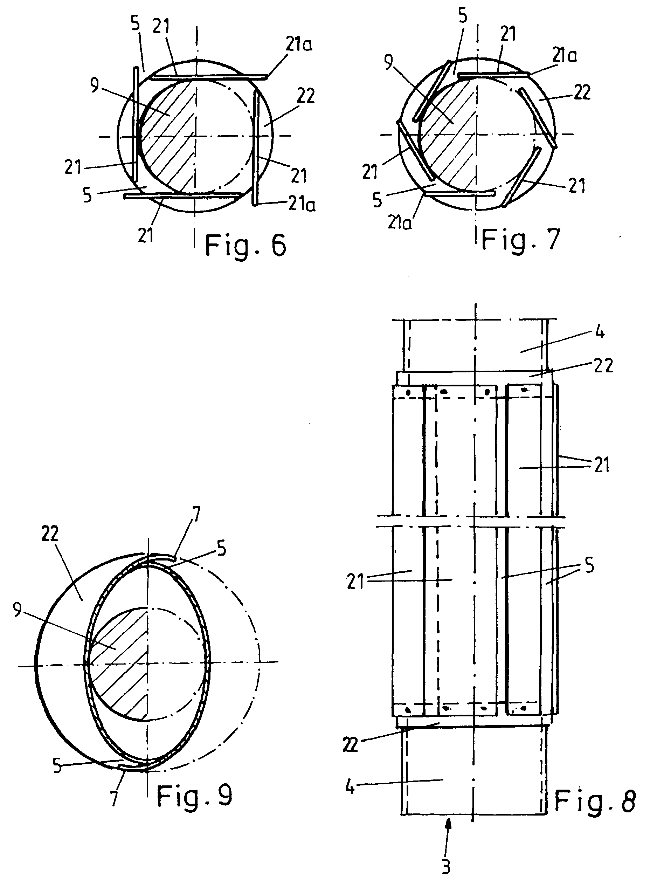

Das Dosierrohr (4) gemäß Fig. 6, 7 und 8 hat im Dosier- und Einlaufbereich für das Schüttgut (G) eine polygonale, wie dreieckige, quadratische oder sechseckige Grundform, welche von die Schlitze (5) bildenden Messern (21) mit/ohne Schälkanten (21a), Lamellen, Stäben o. dgl. gebildet sind.

Weiterhin läßt sich das Dosierrohr (4) im Dosier- und Einlaufbereich käfigartig aus einer Vielzahl an die Schlitze (5) bildenden Lamellen oder Stäben (21) o. dgl. bilden, wie auch Fig. 8 zeigt.

Die Messer (21) oder Lamellen (21) oder Stäbe (21) sind zwischen zwei Lagerbunden (22) des Dosierrohres (4) festgelegt, z.B. durch Schrauben, Nieten o. dgl. befestigt.

Gemäß der weiteren Ausführung nach Fig. 9 hat das Dosierrohr (4) mit Schlitzen (5) und mit/ohne Schälkanten (7) mindestens im Dosier- und Einlaufbereich für das Schüttgut (G) einen ovalen Querschnitt; auch dieser ovale Dosierrohrteil ist zwischen zwei Lagerbereichen (22) angeordnet.

In dem polygonalen oder ovalen Dosierrohrteilquerschnitt ist ein im Querschnitt kreisförmiger Dosierkolben (9) verschiebbar; dabei kann aber der Dosierkolben (9) auch eine dem Dosierrohrteil angepaßte eckige oder ovale Querschnittsform haben.

## Patentansprüche

1. Dosier- und Austragsvorrichtung für Schüttgüter, mit einem das Schüttgut aufnehmenden Behälter mit untenseitigem Auslaß und einem im Behälter rotierenden und vertikal verstellbaren, den Auslaß öffnenden und verschließenden Dosierkörper,
gekennzeichnet durch ein Dosierrohr (4) mit mindestens einer Einlauföffnung (5, 6) für das aus dem Behälter (1) in das Dosierrohr (4) hineinzuführende Schüttgut (G) und einem im Dosierrohr (4) vertikal verschiebbaren, den Querschnitt der Einlauföffnung (5, 6) einstellenden kolbenförmigen Dosierschieber (9).

2. Dosier- und Austragsvorrichtung nach Anspruch 1, dadurch gekennzeichnet, daß das Dosierrohr (4) rotierend im Behälter (1) angeordnet ist, mindestens eine Einlauföffnung (5, 6) mit daran nach außen vorstehender Schälkante (6, 7) für das aus dem Behälter (1) in das Dosierrohr (4) hineinzuführende Schüttgut (G) hat und im Dosierrohr (4) der vertikal verschiebbare, den Querschnitt der Einlauföffnung (5, 6) stufenlos oder stufenweise einstellende Dosierschieber (9) verschiebegeführt angeordnet ist.

3. Dosier- und Austragsvorrichtung nach Anspruch 1 oder 2, dadurch gekennzeichnet, daß im Dosierrohr (4) mehrere Löcher (6) als Einlauföffnungen (6) mit nach außen herausgeformten Schälkanten (8) bildenden Rändern ausgenommen sind.

4. Dosier- und Austragsvorrichtung nach einem der Ansprüche 1 bis 3, dadurch gekennzeichnet, daß die Löcher (6) in Rohr-Längsrichtung und auf dem Rohr-Umfang im Abstand zueinander im Dosierrohr (4) angeordnet und ihre Ränder (8) kraterartig ausgeformt sind.

5. Dosier- und Austragsvorrichtung nach Anspruch 1 oder 2, dadurch gekennzeichnet, daß im Dosierrohr (4) als Einlauföffnung (5) ein in Rohr-Längsrichtung verlaufender Schlitz (5) ausgespart ist, dem eine sich über die gesamte Schlitzlänge erstreckende, nach außen vorstehende, messerartige Schälkante (7) zugeordnet ist.

6. Dosier- und Austragsvorrichtung nach einem der Ansprüche 1, 2 oder 5, dadurch gekennzeichnet, daß die Schälkante (7) von einem nach außen herausgeformten und gleichzeitig den Schlitz (5) ergebenden Rohrstreifen (4a) des Dosierrohres (4) gebildet ist.

7. Dosier- und Austragsvorrichtung nach einem der Ansprüche 1, 5 oder 6, dadurch gekennzeichnet, daß der Rohrstreifen (4a) mit einem Streifen-Längsrand mit dem Dosierrohrmantel einstückig verbunden ist, sich bogenförmig mit Abstand vor dem Schlitz (5) erstreckt und mit seinem freien Streifen-Längsrand die Schälkante (7) bildet.

8. Dosier- und Austragsvorrichtung nach einem der Ansprüche 1, 5 bis 7, dadurch gekennzeichnet, daß im Dosierrohr (4) zwei oder mehrere sich gegenüberliegende Schlitze (5) mit je einer außenliegenden Schälkante (7) angeordnet sind.

9. Dosier- und Austragsvorrichtung nach einem der Ansprüche 1 bis 8, dadurch gekennzeichnet, daß die Schlitze (5) mit ihrer Länge und die Löcher (6) in ihrer Reihenlänge einen Teil der Rohrlänge des Dosierrohres (4) einnehmen und mit Abstand zum unteren in den Auslaß (3) eintauchenden Ende des Dosierrohres (4) beginnen.

10. Dosier- und Austragsvorrichtung nach einem der Ansprüche 1 bis 9, dadurch gekennzeichnet, daß der Dosierkolben (9) von einem Kolben mit kreisförmigem, eckigem oder ovalem Querschnitt gebildet ist.

11. Dosier- und Austragsvorrichtung nach einem der Ansprüche 1 bis 10, dadurch gekennzeichnet, daß der kolbenförmige Dosierschieber (9) mit einem Querstift (10) in den bzw. in die Schlitze (5) eingreift und geringfügig nach außen aus den Schlitzen (5) heraussteht.

12. Dosier- und Austragsvorrichtung nach einem der Ansprüche 1 bis 11, dadurch gekennzeichnet, daß das Dosierrohr (4) und der Dosierkolben (9) und in Längsrichtung zylindrisch ausgebildet sind.

13. Dosier- und Austragsvorrichtung nach einem der Ansprüche 1 bis 12, dadurch gekennzeichnet, daß das Dosierrohr (4) im Dosier- und Einlaufbereich für das Schüttgut (G) eine polygonale, wie dreieckige, quadratische oder sechseckige Grundform hat, welche von die Schlitze (5) bildenden Messern (21) mit/ohne Schälkanten (21a) gebildet sind.

14. Dosier- und Austragsvorrichtung nach einem der Ansprüche 1 bis 13, dadurch gekennzeichnet, daß das Dosierrohr (4) im Dosier- und Einlaufbereich käfigartig aus einer Vielzahl an die Schlitze (5) bildenden Lamellen oder Stäben (21) o. dgl. ausgebildet ist.

15. Dosier- und Austragsvorrichtung nach einem der Ansprüche 1 bis 14, dadurch gekennzeichnet, daß die Messer (21) oder Lamellen (21) oder Stäbe (21) zwischen zwei Lagerbunden (22) des Dosierrohres (4) festgelegt sind.

16. Dosier- und Austragsvorrichtung nach einem der Ansprüche 1 bis 12, dadurch gekennzeichnet, daß das Dosierrohr (4) mit Schlitzen (5) und mit/ohne Schälkanten (7) mindestens im Dosier- und Einlaufbereich für das Schüttgut (G) einen ovalen Querschnitt hat.

17. Dosier- und Austragsvorrichtung nach einem der Ansprüche 1 bis 16, dadurch gekennzeichnet, daß das Dosierrohr (4) mit seinem oberen und unteren Längenende in einer Lagerung (11, 12) abgedichtet gehalten ist, wobei die untere Lagerung (12) den Auslaß (3) freigibt und der Kolben mit einer am oberen Kolbenende angeordneten Dichtung (14) gegenüber dem Dosierrohr (4) abgedichtet ist und mit seinem unteren Ende in der Schließstellung in eine Dichtung (15) der auslaufseitigen Lagerung (12) eintaucht.

18. Dosier- und Austragsvorrichtung nach einem der Ansprüche 1 bis 17, dadurch gekennzeichnet, daß am Dosierrohr (4) mindestens ein mit demselben rotierender Rührer (16) in Bügelform zur Schüttgutauflockerung befestigt und in dem Behälter (1) mindestens eine das Schüttgut (G) gegen Rotation sichernde Rückhaltewand (17) angeordnet ist.

19. Dosier- und Austragsvorrichtung nach einem der Ansprüche 1 bis 18, dadurch gekennzeichnet, daß das Dosierrohr (4) mit der Verstellstange (9a) des Dosierkolbens (9) mit dem oberen aus dem Behälter (1) herausstehenden Endbereich an einen Antrieb (18) für die Dosierrohr-Rotation und Kolben-Vertikalverstellung ankuppelbar ist.

20. Dosier- und Austragsvorrichtung nach Anspruch 1, dadurch gekennzeichnet, daß das Dosierrohr (4) mit Löchern oder Schlitzen als Einlauföffnungen (5, 6) ausgestaltet und sein die Einlauföffnungen (5, 6) aufweisender Rohrmantel außenseitig auf der gesamten, die Einlauföffnungen (5, 6) zeigenden Rohrlänge glatt (vorsprungslos) ausgebildet ist.
